(19) Europäisches Patentamt
European Patent Office
Office européen des brevets

(11) Publication number: **0 145 223**
**B1**

# (12) EUROPEAN PATENT SPECIFICATION

(45) Date of publication of patent specification: **28.02.90**

(51) Int. Cl.$^5$: **A 01 N 59/12**, A 01 N 25/30

(21) Application number: **84307473.3**

(22) Date of filing: **30.10.84**

## (54) Highly stable free iodine iodophor compositions, process for preparing same and process for using same.

(30) Priority: **04.11.83 US 549106**

(43) Date of publication of application:
**19.06.85 Bulletin 85/25**

(45) Publication of the grant of the patent:
**28.02.90 Bulletin 90/09**

(84) Designated Contracting States:
**DE FR GB IT**

(56) References cited:
GB-A- 703 091
GB-A-1 004 282
GB-A-1 191 970
GB-A-1 467 614

(73) Proprietor: **Rivera, Mario Flores**
**Calle San Salvador 457**
**San Salvador (SV)**

(72) Inventor: **Rivera, Mario Flores**
**Calle San Salvador 457**
**San Salvador (SV)**

(74) Representative: **Pendlebury, Anthony et al**
**PAGE, WHITE & FARRER 54 Doughty Street**
**London WC1N 2LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 145 223 B1

**Description**

The present invention relates to iodophor compositions containing highly stable free iodine, a process for preparing same and a process for using same as a fungicide or bactericide.

Fungicidal compositions based on copper salts are well known to kill a wide variety of fungus on contact. However, these preparations act only on the external surfaces of plants and are not absorbed by plant tissues. Thus, these compositions only control the external fungi manifestation of infected vegetation while leaving unaffected the internal manifestation. That is, vegetation infected by fungus suffer internal damage, for example, energetic and hormonal imbalance, i.e., vegetation infected by bacteria or fungi suffer internal damage due to toxins generated by the pathogens as well as the plugging of the food conducting tissues at the union between the stock and scion which quickly kills the vegetation. Hence, it is desired that fungicides/bactericides not only kill fungi on the surface of the vegetation but also enter the plant system and are active therein.

The term "vegetation" herein is intended to mean any plant, cane, vine, shrub, bush, tree or any vegetation in general.

Attempts have been made to find a satisfactory method for effectively combating fungi such as coffee tree rust (*Hemileia vastatrix Berk.*). However, known treatments have not achieved a satisfactory degree of success beyond a partial control of the external manifestation of the fungi.

Various iodophor compositions are well known in the art to be suitable as bactericides and fungicides. More specifically, U.S. Patent 4,271,149 teaches germicidal iodine compositions comprising an aqueous solution of iodine, iodide ion, iodate ion and an organic substance which slowly reacts with iodine, for example, a surface active agent such as ethoxylates of alkyl phenols. In such compositions, the free iodine level is maintained for extended periods of time by the presence of both an iodate ion and a buffer to control the pH within the range of 5—7. Such compositions are disadvantageous in that they require both the addition of an iodate ion and a buffer for maintainance of the pH range.

U.S. Patent 4,288,428 teaches an iodophorous disinfecting composition comprising an iodophor in the form of an alkyl phenoxy poly(ethyleneoxy)-ethanol-iodine complex. This iodophor complex contains 5—10% by weight urea and an acid in an amount sufficient to maintain a pH between 1—5. This composition is disadvantageous in that it requires the use of both urea and an acid to control the pH as well as a solvent.

U.S. Patent 4,113,857 discloses a method for producing an organic iodophor germicidal composition comprising reacting an organic iodophor forming compound, for example, nonly phenoxy poly(ethyleneoxy)-ethanol with an iodine adding agent, for example, potassium iodide, and hydriodic acid in the presence of an oxidizing stabilizer such as potassium iodate. This iodophor preparation is disadvantageous since it requires the use of hydriodic and an iodate.

U.S. Patent 344,056 discloses a disinfectant consisting of a mixture of ammonium chloride, potassium iodide dissolved in water and iodine. However, this composition is disadvantageous since it is not very stable.

Great Britain Patent 1,191,970 teaches an iodophor for combating *Pseudomonas morsprumorum* on cherry trees. The iodophor composition employed therein is not a free iodine complex, rather, it is an iodine carrier complex.

An object of the present invention is to provide a highly stable free iodine phosphor composition that does not require the use of a buffer solution to maintain the pH so as to prevent reduction of the free iodine into iodide.

Another object of the present invention is to provide a fungicide/bactericide which is effective against internal fungi/bacterial infections of vegetation, i.e., a fungicide/bactericide which has systemic properties.

An additional object of the present invention is to provide a method for producing the above-described iodophor composition.

A still further object of the present invention is to provide a method of use of the iodophor composition as a bactericidal, fungicidal, or disinfectant composition.

The above objects of the present invention have been met in one embodiment by an iodophor composition comprising:

(a) an ether-nonyl polyglycol ethoxylate having an ethylene oxide mole number greater than 4 represented by the following formula:

$$C_9H_{19}C_6H_4(OCH_2CH_2)_XOH$$

X=number of moles of ethylene oxide

(b) elemental iodine;

(c) potassium iodide; and

(d) optionally, an agriculturally acceptable liquid carrier or diluent.

As stated above, the present invention provides a highly stable free iodine iodophor composition comprising, in admixture:

(a) an ether-nonyl polyglycol ethoxylate having an ethylene oxide mole number greater than 4 and up to 30;

(b) elemental iodine;
(c) potassium iodide;
(d) an agriculturally acceptable liquid carrier or diluent,

wherein the weight ratio of elemental iodine to potassium iodide is in the range of about 1:1.01 to 1:1.05, the weight ratio of the ether-nonyl polyglycol ethoxylate to the combined weight of the elemental iodine and the potassium iodide is in the range of about 3:1 to 20:1 and wherein the agriculturally acceptable carrier or diluent is water.

The stability of the iodophor composition of the present invention is obtained by the addition, to a free iodine solution, of the ether-nonyl polyglycol ethoxylate having an ethylene oxide mole number greater than 4. That is, the oxidation of elemental iodine through potassium iodide is stabilized by the non-ionic compound, i.e., ether-nonyl polyglycol ethoxylate having an ethylene oxide mole number greater than 4. While the upper limit of the ethylene oxide mole number is not critical, a typical upper range is 30, a preferred range is up to 10. Examples of such ether-nonyl polyglycol ethoxylates useful in the present invention include Hostapal 3634 (ethylene oxide mole number of 10), Arkopal N-090 (ethylene oxide mole number of 9), Arkopal N-080 (ethylene oxide mole number of 8), Arkopal N-100 (ethylene oxide mole number of 10), Arkopal N-060 (ethylene oxide mole number of 6), Arkopal N-110 (ethylene oxide mole number of 11), Arkopal N-130 (ethylene oxide mole number of 13), Arkopal N-150 (ethylene oxide mole number of 15), Arkopal N-230 (ethylene oxide mole number of 23) and Arkopal N-300 (ethylene oxide mole number of 30). When the ethylene oxide mole number increases, the solubility of the ether-nonyl polyglycol ethoxylate is also increased. Preferably, Hostapal 3634, Arkopal N-060 and Arkopal N-100 are employed in the present invention.

Some surface active agents induce foliar phytotoxicity at concentrations above 0.01%. The surface active agents employed in the present invention are ones where penetration of the composition into vegetation when applied to the surface thereof is enhanced.

The ether-nonyl polyglycol ethoxylate having an ethylene oxide mole number greater than 4 may be dissolved in, e.g., hard water or soft water at a temperature of about 70°C, preferably not less than 60°C, although higher temperatures, i.e., up to just less than the boiling point can also be used. The ether-nonyl polyglycol ethoxylate having an ethylene oxide mole number greater than 4 cannot be used in water solutions containing more than 1.5 ppm chlorine since the stability thereof is adversely affected.

A useful weight ratio of elemental iodine to potassium iodide is in the range of 1:1.01 to 1:1.05, preferably 1:1.03.

It is preferable that the weight ratio of the ether-nonyl polyglycol ethoxylate having an ethylene oxide mole number greater than 4 to the combined weight of the elemental iodine and the potassium iodide is 3:1 to 20:1, more preferably 6:1.

The iodophor composition of the present invention is prepared by first dissolving elemental iodine and potassium iodide in water, at a temperature of not more than about 25°C, preferably not less than 20°C. Then, the mixture is diluted in 1 to 4 parts water (Solution A).

Next, an ether-nonyl polyglycol ethoxylate having an ethylene oxide mole number greater than 4 is dissolved at a ratio of not more than 1.25 parts (w/w) ether-nonyl polyglycol ethoxylate having an ethylene oxide mole number greater than 4 to 1.0 part (w/w) water at a temperature of 60 to 70°C under agitation so as to achieve a concentration of preferably 55% by weight of ether-nonyl polyglycol ethoxylate having an ethylene oxide mole number greater than 4. Thereafter, the solution is allowed to cool to a temperature of 20—25°C (Solution B).

Then, Solution A and Solution B are slowly mixed together under agitation and thoroughly mixed so as to provide a weight ratio of the ether-nonyl polyglycol ethoxylate having an ethylene oxide mole number greater than 4 to the combined weight of the elemental iodine and the potassium iodide of 3:1 to 20:1, preferably about 6:1.

The resulting composition is represented by the formula:

$$[C_9H_{19}C_6H_4(COCH_2CH_2)_x]_3I^{-3}$$

The resulting iodophor composition can be stably stored for extensive periods of time, e.g., more than two years, when stored in, for example, an amber stained glass or plastic opaque container at room temperature (25°C to 30°C) without loss of fungicidal, bactericidal or disinfectant activity, as shown in the following Table.

TABLE 1

| Test | Days 8 | Days 30 | Days 60 | Days 120 | Days 240 | Days 480 | Days 720 |
|---|---|---|---|---|---|---|---|
| ρ | + | + | + | + | + | + |  |
| α | + | + | + | + | + | + |  |
| Stability | + | + | + | + | + | + |  |
| Separation | + | + | + | + | + | + |  |

+=good
−=bad

ρ: is the density of the composition determined by measurements of mass and volume.

α: is the viscosity of the composition determined by a viscometer (Cannon-Fenske).

Stability: is the stability of the composition determined by testing the bactericidal and fungicidal effectiveness of the composition.

Separation: is a determination of the stability of the composition evaluated by visually comparing color and translucence.

In Table 1, samples of the composition of this invention were stored and analyzed after a period of 8 days, 30 days, 60 days, 120 days, 240 days, 480 days and 720 days. The results in Table 1 indicate that no substantial changes were seen in the stability of free iodine in the composition of the present invention.

The iodophor composition of the present invention is particularly suitable for use on various plants that are infected with various fungi. For example, coffee trees infected with *Hemileia vastatrix Berk;* or citrus trees infected with "Foot Rot" *Phytophthora parasitica Dast., Phythophthora citrophthora* or *Diplodia noctaleusis.*

In addition, the iodophor composition of the present invention is useful for killing various fungi and bacteria on fresh foods and vegetables. For example, the composition of this invention is effective against the following bacteria: *Bacillus sp.; Staphyloccoccus sp.; Coliphorms; Candida sp.; Salmonella typhi; E. coli; Shigella B.; Proteus vulgaris; Proteus mirabilis; Pseudomonas aeruginosa; Proteus morgani; Proteus rettger; Micobacterium;* and *Tuberculossum*; as well as the following fungi: *Septobasidium pseudopedicillatum Baurt., Collectrichum gloesporiodes* or *Elsinoe Fawcetti Bit..*

Treatment with the iodophor composition of the present invention may be effective in a variety of ways such as spraying, brushing, washing or immersion.

The iodophor composition of the present invention can be used in its original concentration by brushing or by any other application method directly to the trunk and branches of trees. Pruning cuts and other bark openings can also be treated with the composition of the present invention without any phytotoxic effects. These types of treatment are rapidly effective.

It is preferable that vegetation is sprayed with an aqueous solution of from 2% to 100% (v/v), preferably 2 to 5% (v/v), of the iodophor composition of the present invention. When the amount used is below 2% (v/v), the effectiveness is decreased.

As a systemic solution, the iodophor composition of the present invention is quickly absorbed through the leaves and bark of trees without danger of being washed out by rain, even if it rains about 3 to 4 hours after application. In addition, since there is no reduction of free iodine in the composition of the present invention, there is no danger of phytotoxic effects.

The time most appropriate for treatment using the iodophor composition of this invention depends upon the time of fungal attack. It is preferable that the first treatment of the composition of the present invention occur about 30 days before the rainy season starts. Of course, this will vary depending upon the geographical location of the trees. At this time, the treatment will kill, by contact, the fungi endospores as a preventative treatment and at the same time will stimulate flowering, fructification and the growing of new stems as a result of the systemic action of the composition of the present invention in controlling the internal disease manifestation.

It is preferred that a second treatment be made in the middle of the rainy season. At this time, any new fungus attack will be combated and again plant growth will be stimulated.

The iodophor composition of the present invention is also suitable for sterilizing fruits and fresh vegetables. Once the fruit is picked from the tree it is susceptible to the invasion of microorganisms that cause rotting. At the same time, pathogenic bacteria can be picked up by contact with contaminated soil or water. In addition, blue or green mold, *Penicillium sp.,* or stem end rot caused by *Diaphorte citri* or *Diplodia noctaleusis* can also infect the fruit. These microorganisms are effectively destroyed by the iodophor composition of the present invention. Spray application is recommended to treat leaves or other soft vegetables without damaging or impairing appearance.

The following examples are illustrative of the present invention and are in no way intended to limit the scope thereof.

Example 1

The iodophor composition of the present invention used as a spray, 0.01136 $m^3$ (three gallons) of the composition as defined below diluted (v/v) in 0.21575 $m^3$ (57 gallons of water), was sufficient to cover one hectare of a coffee plantation.

| | %/W |
|---|---|
| Hostapal 3634 | 1.3177 |
| KI | 0.0922 |
| I | 0.0896 |
| $H_2O$ | 98.5005 |
| | 100.0000 |

A hectare of coffee trees infected with *Hemileia vastatrix Berk,* located in El Salvador, Central America, was treated with the above 5% (v/v) solution of the iodophor composition of the present invention in April, i.e., 30 days before the rainy season began. The rainy season in El Salvador lasts for about 6 months. A second hectare of coffee trees infected with *Hemileia vastatrix Berk* was left untreated as a control.

The fungus on the surface of the treated trees was killed within 30 days after the treatment and fructification, flowering and the growing of new stems was stimulated thereafter. The fungus prevention effect of the single treatment with the iodophor composition of the present invention lasted 72 days. In contrast, the untreated coffee trees remained infected with the fungus and damage to the trees continued.

Example 2

The iodophor composition of the present invention can be used to combat fungi in several citric varieties and as shown below can be effective to control and cure "Foot Rot" disease caused by *Phytophthora parasitica Dast., Phytophthora citrophthora* and *Diplodia noctaleusis.*

A solution of 5% (v/v) of the iodophor composition of Example 1 was sprayed on one hectare of persic lemon trees infected with "Foot Rot". The aqueous solution acted on the fungi endospores on the bark and leaves of the trees within a few days and was absorbed by the tree system where it acted to combat the internal fungi manifestation affecting the conducting tissues. Persic lemon trees not treated with the composition of the present invention and used as a control were killed by the "Foot Rot".

The iodophor composition of the present invention was also used in its original concentration by brushing it directly on the trunk and branches of persic lemon trees as well as a cover on pruning cuts.

Sap leakage through damaged bark stopped in the treated persic lemon trees after about 10 to 20 days from the date of treatment. Abundant buds, new leaves and stems were also observed in the treated trees and early fruit dropping was reduced which increased the yield of fruit. In contrast, new leaves and stems were not observed in the untreated trees used as a control.

Example 3

An aqueous solution of 2% (v/v) of the iodophorous composition of the present invention, as defined below, in water was sprayed on different fresh fruits and vegetables, i.e., citrus fruit, bananas, tomatoes, lettuce, avocados, cucumbers, potatoes, cabbage and carrots on conveyor tables, at handling times or in wash dipping baths.

| | %/W |
|---|---|
| Hostapal 3634 | 0.52708 |
| KI | 0.03688 |
| I | 0.03584 |
| $H_2O$ | 99.40020 |
| | 100.00000 |

The solution destroyed the fungi and bacteria and thus sterilized the fruit as shown in Table 2 below.

TABLE 2

| Time of inspection after treatment | Treated | Untreated | Additional observations |
|---|---|---|---|
| 24 hours | No signs of fungal and/or bacterial infestation. | No signs of bacterial infestation. | Some of the untreated fruit was softer than the treated ones. |
| 48 hours | No signs of fungal growth. No signs of rotting. | Signs of rotting and spots of fungal growth. | Untreated fruit and vegetables started to rot. |
| 72 hours | No signs of fungal or bacterial growth. | Fungi and bacteria colonies present. Rotting process well established. | Treated fruit was firm and clean. No fungal spots observed. Untreated fruit showed large colonies of *Aspergillus, Penicillium* Green and white stains. Bananas were the most affected. |
| 5 days | No signs of fungal and/or bacterial infestation. Texture changes. Fruit soft. | Rotting process established. Bacteria and fungi established. | Treated fruit was clean and acceptable. Untreated fruit were not acceptable. |

A low dosage of the iodophor composition of the present invention used for sterilization purposes insures that there is no danger of poisoning by animals or humans after ingestion of the treated fruit or vegetables. All of the fruits and vegetables treated lasted longer, were free of rot and did not act as vectors for viruses or bacteria that cause infectious diseases.

Example 4

The bactericidal effectiveness of a 10% (v/v) solution of the composition of the present invention, as defined below, was measured *in vitro* against bacteria in the following manner. Various bacteria, i.e., *Proteus vulgaris, Proteus morgani, Proteus mirabilis, Proteus rettgeri, Pseudomonas aeruginosa, Shigella B., Salmonella typhi,* and *Microbacteria tuberculossum,* were grown on glass slides and treated with the composition of the present invention and evaluated at various time intervals by counting the bacteria and fungi.

| | %/W |
|---|---|
| Hostapal 3634 | 2.6354 |
| KI | 0.1844 |
| I | 0.1792 |
| $H_2O$ | 97.0010 |
| | 100.0000 |

The results are shown in Table 3 below.

TABLE 3

| Dilution | 5 minutes after bacterial planting | 10 minutes after bacterial planting | 20 minutes after bacterial planting |
|---|---|---|---|
| 1:10 | No bacteria | No bacteria | No bacteria |

Example 5

The bactericidal and fungicidal effectiveness of the composition of Example 4 was measured *in situ* on tomatoes, cabbages and cucumbers which were inoculated with pathogenic bacteria and fungi 5 minutes and 24 hours after first being treated with a 10% (v/v) solution of the composition of the present invention. The results are shown in Table 4 below.

TABLE 4

| | *Bacillus sp.* | *Staphyloccus sp.* | *Collyphorm* | *Penicillum sp.* | *Candida sp.* | *Aspergillus sp.* |
|---|---|---|---|---|---|---|
| Untreated (observed at 24 hours) | 430,000* | 143,000 | 450,000 | abundant growth | abundant growth | abundant growth |
| Inoculated after 5 min. (observed at 24 hours) | no growth | no growth | no growth | no growth | no growth | no growth |
| Inoculated after 5 min. (observed at 48 hours) | no growth | no growth | no growth | reduced growth | reduced growth | reduced growth |
| Inoculated after 5 min. (observed at 72 hours) | no growth | no growth | no growth | reduced growth | reduced growth | reduced growth |
| Inoculated after 24 hrs. (observed at 24 hours) | no growth | no growth | no growth | no growth | no growth | no growth |
| Inoculated after 24 hrs. (observed at 48 hours) | 30,000 | no growth | 2,000 | reduced growth | reduced growth | reduced growth |
| Inoculated after 24 hrs. (observed at 72 hours) | 35,000 | no growth | 5,000 | reduced growth | reduced growth | reduced growth |

*bacterial cells/ml

**Claims**

1. A highly stable free iodine iodophor composition comprising, in admixture:

(a) an ether-nonyl polyglycol ethoxylate having an ethylene oxide mole number greater than 4 and up to 30;

(b) elemental iodine;

(c) potassium iodide;

(d) an agriculturally acceptable liquid carrier or diluent,

wherein the weight of elemental iodine to potassium iodide is in the range of about 1:1.01 to 1:1.05, the weight ratio of the ether-nonyl polyglycol ethoxylate to the combined weight of the elemental iodine and the potassium iodide is in the range of about 3:1 to 20:1 and wherein the agriculturally acceptable carrier or diluent is water.

2. A composition as claimed in Claim 1, wherein said ether-nonyl polyglycol ethoxylate has an ethylene oxide mole number up to 10.

3. A composition as claimed in Claim 1, wherein the ether-nonyl polyglycol ethoxylate is selected from ether-nonyl polyglycol ethoxylates having an ethylene oxide mole number of 10, of 9, of 8, of 6, of 11, of 13, of 15, of 23, or of 30.

4. A composition as claimed in Claim 3, wherein the weight ratio of elemental iodine to potassium iodide is 1:1.03.

5. A composition as claimed in any one of the preceding claims, wherein the weight ratio of the ether-nonyl polyglycol ethoxylate to the combined weight of the elemental iodine and the potassium iodide is 6:1.

6. A process for preparing a highly stable free iodine iodophor composition comprising the steps of:

(1) dissolving elemental iodine and potassium iodide in water at a weight ratio of 1:1.01 to 1:1.05 and of a temperature of not more than about 25°C and diluting the resulting mixture in 1 to 4 parts water or other agriculturally acceptable diluent;

(2) dissolving ether-nonyl polyglycol ethoxylate having an ethylene oxide mole number greater than 4 and up to 30 in water at a ratio of not more than 1.25 parts (w/w) ether-nonyl polyglycol ethoxylate to 1 part (w/w) of water at a temperature of about 60—70°C under agitation;

(3) cooling the resulting solution of step (2) to a temperature of about 20 to 25°C;

(4) mixing the resulting solutions of steps (1) and (3) under agitation, so as to provide a weight ratio of the ether-nonyl polyglycol ethoxylate having an ethylene oxide number greater than 4 and up to 30 to the combined weight of the elemental iodine and the potassium iodide of 3:1 to 20:1.

7. A process as claimed in Claim 6, wherein the ether-nonyl polyglycol ethoxylate is selected from ether-nonyl polyglycol ethoxylates having an ethylene oxide mole number of 10, of 9, of 8, of 6, of 11, of 13, of 15, of 23, or of 30.

8. A process as claimed in Claim 6, wherein the ether-nonyl polyglycol ethoxylate has an ethylene oxide mole number up to 10.

9. A method of treating fungicidal and/or bactericidal infestations or conditions in vegetation which method comprises treating the vegetation with, as a bactericidal, fungicidal or disinfectant agent, an effective amount of a composition as claimed in any one of Claims 1 to 8.

10. A method of sterilising fruits or vegetables, which method comprises treating the fruits or vegetables with an effective amount of a composition as claimed in any one of Claims 1 to 8.

11. A process as claimed in Claim 9 or 10, wherein the composition is used in a concentration of from about 2 to 100% (v/v).

12. A process as claimed in Claim 11, wherein said composition is used in a concentration of from 2 to 5% (v/v).

13. A process as claimed in any one of Claims 9 to 12, wherein the treating is by spraying, brushing, washing or immersing said composition onto the vegetation or the fruits or vegetables.

14. A process as claimed in any one of Claims 9 to 13, wherein the vegetation is coffee trees or citrus trees.

15. A process as claimed in any one of Claims 9 to 13, wherein the vegetation is fruit or vegetables.

16. A process as claimed in Claim 14, wherein the coffee trees are protected against *Hemileia vastatrix Berk.*

17. A process as claimed in Claim 14, wherein the citrus trees are protected against *Phytophthora parasitica Dast* and *Phytophthora citrophthora.*

**Patentansprüche**

1. Hochstabile, freies Jod enthaltende Jodophor-Zusammensetzung, umfassend in Abmischung:

(a) ein Ether-nonylpolyglykolethoxylat mit einer Ethylenoxid-Molzahl grösser als 4 und bis zu 30,

(b) elementares Jod,

(c) Kaliumjodid,

(d) einen landwirtschaftlich verträglichen flüssigen Träger oder ein entsprechendes Verdünnungsmittel,

worin das Gewichtsverhältnis von elementarem Jod zu Kaliumjodid im Bereich von ca. 1:1,01 bis 1:1,05, das Gewichtsverhältnis des Ether-nonylpolyglykolethoxylates zum vereinigten Gewicht des elementaren Jods und des Kaliumjodids im Bereich von ca. 3:1 bis 20:1 liegen und der landwirtschaftlich verträgliche Träger oder das Verdünnungsmittel Wasser sind.

2. Zusammensetzung gemäss Anspruch 1, dadurch gekennzeichnet, dass das genannte Ether-nonylpolyglykolethoxylat eine Ethylenoxid-Molzahl bis zu 10 aufweist.

3. Zusammensetzung gemäss Anspruch 1, dadurch gekennzeichnet, dass das Ether-nonylpolyglyckolethoxylat aus Ether-nonylpolyglykolethoxylaten mit einer Ethylenoxid-Molzahl von 10, 9, 8, 6, 11, 13, 15, 23 oder 30 ausgewählt ist.

4. Zusammensetzung gemäss Anspruch 3, dadurch gekennzeichnet, dass das Gewichtsverhältnis von elementarem Jod zu Kaliumjodid 1:1,03 beträgt.

5. Zusammensetzung gemäss jedem der vorhergehenden Ansprüche, dadurch gekennzeichnet, dass das Gewichtsverhältnis des Ether-nonylpolyglykolethoxylates zum vereinigten Gewicht des elementaren Jods und des Kaliumjodids 6:1 beträgt.

6. Verfahren zur Herstellung einer hochstabilen, freies Jod enthaltenden Jodophor-Zusammensetzung, wobei man

(1) elementares Jod und Kaliumjodid mit einem Gewichtsverhältnis von 1:1,01 bis 1:1,05 und bei einer Temperatur von nicht mehr als ungefähr 25°C in Wasser auflöst und die sich ergebende Mischung in 1 bis 4 Teilen Wasser oder einem anderen landwirtschaftlich zulässigen Verdünnungsmittel verdünnt,

(2) Ether-nonylpolyglykolethoxylat mit einer Ethylenoxid-Molzahl grösser als 4 und bis zu 30 in Wasser bei einem Verhältnis von nicht mehr als 1,25 Teilen (G/G) Ether-nonylpolyglykolethoxylat auf einen Teil (G/G) Wasser bei einer Temperatur von ca. 60 bis 70°C unter Rühren auflöst,

(3) die sich ergebende Lösung aus Stufe (2) auf eine Temperatur von ca. 20 bis 25°C abkühlt,

(4) die sich ergebenden Lösungen aus den Stufen (1) und (3) unter Rühren vermischt, um somit ein Gewichtsverhältnis des Ether-nonylpolyglykolethoxylats mit einer Ethylenoxid-Molzahl grösser als 4 und bis zu 30 zum vereinigten Gewicht des elementaren Jods und des Kaliumjodids von 3:1 bis 20:1 bereitzustellen.

7. Verfahren gemäss Anspruch 6, dadurch gekennzeichnet, dass das Ether-nonylglykolethoxylat aus Ether-nonylpolyglykolethoxylaten mit einer Ethylenoxid-Molzahl von 10, 9, 8, 6, 11, 13, 15, 23 oder 30 ausgewählt ist.

8. Verfahren gemäss Anspruch 6, dadurch gekennzeichnet, dass das Ether-nonylpolyglykolethoxylat eine Ethylenoxid-Molzahl bis zu 10 aufweist.

9. Verfahren zur Behandlung von Schädlings- und/oder Bakterienplagen oder -zuständen in der Vegetation, wobei man die Vegetation mit einer wirksamen Menge einer Zusammensetzung gemäss jedem der Ansprüche 1 bis 8 als einem bakteriziden, fungiziden oder desinfizierenden Mittel behandelt.

10. Verfahren zur Sterilisierung von Obst oder Gemüse, wobei man das Obst oder Gemäse mit einer wirksamen Menge einer Zusammensetzung gemäss jedem der Ansprüche 1 bis 8 behandelt.

11. Verfahren gemäss Anspruch 9 oder 10, dadurch gekennzeichnet, dass die Zusammensetzung in einer Konzentration von ca. 2 bis 100% (V/V) verwendet wird.

12. Verfahren gemäss Anspruch 11, dadurch gekennzeichnet, dass die Zusammensetzung in einer Konzentration von 2 bis 5% (V/V) verwendet wird.

13. Verfahren gemäss jedem der Ansprüche 9 bis 12, dadurch gekennzeichnet, dass die Behandlung der vegetation oder des Obstes oder Gemüses durch Besprühen, Bürsten, Waschen oder Eintauchen mit der genannten Zusammensetzung erfolgt.

14. Verfahren gemäss jedem der Ansprüche 9 bis 13, dadurch gekennzeichnet, dass die Vegetation Kaffeebäume oder Zitrusbäume darstellt.

15. Verfahren gemäss jedem der Ansprüche 9 bis 13, dadurch gekennzeichnet, dass die Vegetation Obst oder Gemüse darstellt.

16. Verfahren gemäss Anspruch 14, dadurch gekennzeichnet, dass die Kaffeebäume gegen Hemileia vastatrix Berk geschützt werden.

17. Verfahren gemäss Anspruch 14, dadurch gekennzeichnet, dass die Zitrusbäume gegen Phytophthora parasitica Dast und Phytophthora citrophthora geschützt werden.

**Revendications**

1. Composition iodophore de stabilité élevée contenant de l'iode libre comprenant, en mélange:

(a) un polyéthoxylate de nonylphénol ayant un nombre de moles d'oxyde d'éthylène supérieure à 4 et pouvant aller jusqu'à 30;

(b) de l'iode élémentaire;

(c) de l'iodure de potassium;

(d) un support ou diluant liquide acceptable en agriculture,

dans laquelle le rapport en poids de l'iode élémentaire à l'iodure de potassium se situe dans l'intervalle d'environ 1:1,01 à 1:1,05, le rapport en poids du polyéthoxylate de nonylphénol au poids total de l'iode élémentaire et de l'iodure de potassium se situe dans l'intervalle d'environ 3:1 à 20:1 et le support ou diluant acceptable en agriculture est l'eau.

2. Composition selon la revendication 1, dans laquelle ledit polyéthoxylate de nonylphénol a un nombre de moles d'oxyde d'éthylène pouvant aller jusqu'à 10.

3. Composition selon la revendication 1, dans laquelle le polyéthoxylate de nonylphénol est choisi parmi les polyéthoxylates de nonylphénol ayant un nombre de moles d'oxyde d'éthylène de 10, 9, 8, 6, 11, 13, 15, 23 ou 30.

4. Composition selon la revendication 3, dans laquelle le rapport en poids de l'iode élémentaire à l'iodure de potassium est de 1:1,03.

5. Composition selon l'une quelconque des revendications précédentes, dans laquelle le rapport en poids du polyéthoxylate de nonylphénol au poids total de l'iode élémentaire et de l'iodure de potassium est de 6:1.

6. Procédé pour préparer une composition iodophore de stabilité élevée contenant de l'iode libre comprenant les étapes de:

(1) dissolution d'iode élémentaire et d'iodure de potassium dans de l'eau en un rapport en poids de 1:1,01 à 1:1,05 et à une température non supérieure à environ 25°C et dilution du mélange résultant dans 1 à 4 parties d'eau ou autre diluant accepté en agriculture;

(2) dissolution d'un polyéthoxylate de nonylphénol ayant un nombre de moles d'oxyde d'éthylène supérieur à 4 et pouvant aller jusqu'à 30 dans de l'eau en un rapport non supérieur à 1,25 partie (en poids) du polyéthoxylate de nonylphénol pour 1 partie (en poids) d'eau à une température d'environ 60 à 70°C sous agitation;

(3) refroidissement de la solution résultante de l'étape (2) jusqu'à une température d'environ 20 à 25°C;

(4) mélange des solutions résultantes des étapes (1) et (3) sous agitation, de manière à obtenir un rapport en poids du polyéthoxylate de nonylphénol ayant un nombre de moles d'oxyde d'éthylène supérieur à 4 et pouvant aller jusqu'à 30 au poids total de l'iode élémentaire et de l'iodure de potassium de 3:1 à 20:1.

7. Procédé selon la revendication 6, dans laquelle le polyéthoxylate de nonylphénol est choisi parmi les polyéthoxylates de nonylphénol ayant un nombre de moles d'oxyde d'éthylène de 10, 9, 8, 6, 11, 13, 15, 23 ou 30.

8. Procédé selon la revendication 6, dans lequel le polyéthoxylate de nonylphénol a un nombre de moles d'oxyde d'éthylène pouvant aller jusqu'à 10.

9. Procédé de traitement d'infestations ou d'affections fongiques et/ou bactériennes dans une végétation, lequel procédé consiste à traiter le végétation avec, comme agent bactéricide, fongicide ou désinfectant, une quantité efficace d'une composition selon l'une quelconque des revendications 1 à 8.

10. Procédé de stérilisation de fruits ou légumes, lequel procédé consiste à traiter les fruits et légumes avec une quantité efficace d'une composition selon l'une quelconque des revendications 1 à 8.

11. Procédé selon la revendication 9 ou 10, dans lequel la composition est utilisée à une concentration d'environ 2 à 100% (en volume).

12. Procédé selon la revendication 11, dans lequel ladite composition est utilisée à une concentration de 2 à 5% (en volume).

13. Procédé selon l'une quelconque des revendications 9 à 12, dans lequel le traitement est effectué en appliquant ladite composition par pulvérisation, application à la brosse, lavage ou immersion sur la végétation ou les fruits ou légumes.

14. Procédé selon l'une quelconque des revendications 9 à 13, dans lequel la végétation consiste en caféiers ou citronniers.

15. Procédé selon l'une quelconque des revendications 9 à 13, dans lequel la végétation consiste en fruits ou légumes.

16. Procédé selon la revendication 14, dans lequel les caféiers sont protégés contre *Hemileia vastatrix Berk.*

17. Procédé selon la revendication 14, dans lequel les citronniers sont protégés contre *Phytophthora parasitica Dast* et *Phytophthora citrophthora.*